# EUROPÄISCHE PATENTSCHRIFT

(11) **EP 2 511 850 B1**
(45) Veröffentlichungstag und Bekanntmachung des Hinweises auf die Patenterteilung: **07.06.2017**
(21) Anmeldenummer: 12160922.6
(22) Anmeldetag: 23.03.2012
(51) Int. Cl.: G06K 7/00

(54) **Abschirmung für ein RFID-System**
Shield for an RFID system
Blindage pour un système RFID

(30) Priorität: 12.04.2011 AT 5222011
(43) Veröffentlichungstag der Anmeldung: 17.10.2012
(73) Patentinhaber: Schriebl, Markus, 8580 Köflach - Piber (AT); Pensold, Andreas, 8074 Raaba-Grambach (AT)
(72) Erfinder: Schriebl, Markus, 8580 Köflach - Piber (AT); Pensold, Andreas, 8074 Raaba-Grambach (AT)
(74) Vertreter: Weiser, Andreas

(56) Entgegenhaltungen:
- US-A1- 2008 174 407

## Beschreibung

Die Erfindung betrifft ein RFID-System mit zumindest einem Lesegerät zum Identifizieren von Transpondern, die sich in einem räumlichen Erfassungsbereich des Lesegeräts befinden, wobei eine Abschirmung zum Begrenzen des Erfassungsbereichs vorgesehen ist. Das Dokument DE 10 2006 049 579 A1 offenbart ein solches RFID-System, mit dem an Personen, Tieren, Gütern oder Waren befestigte Transponder von einem Lesegerät kontaktlos ausgelesen werden können. Die Transponder sind durch passive Bauteile mit Antenne realisiert, die ihre Energieversorgung durch das von dem Lesegerät ausgesandte elektromagnetische Feld im Hochfrequenzbereich oder im Ultrahochfrequenzbereich realisieren. Solche RFID-Systeme sind beispielsweise in der Logistik beim Be- und Entladen von Lastkraftwagen oder bei Kassensystemen in Supermärkten im Einsatz.

Um zu verhindern, dass die Lesebereiche benachbarter Lesegeräte einander überlappen und beispielsweise von einem Lesegerät einer Kasse im Supermarkt die Transponder einzelner Produkte von dem Förderband der benachbarten Kasse gelesen und folglich falsch verrechnet werden, weist das bekannte RFID-System eine Abschirmung zum Begrenzen des Erfassungsbereichs bzw. des Lesebereichs des Lesegeräts auf. Bei der Abschirmung des bekannten RFID-Systems wird das Prinzip des Faraday-Käfigs zur Abschirmung ausgenutzt, weshalb die Abschirmung aus elektrisch leitfähigen Gitter- bzw. Netzstrukturen gebildet ist.

Bei diesen bekannten Abschirmungen hat sich als Nachteil erwiesen, dass die Metallgitter oder Metallplatten je nach Anwendungsfall sehr groß bzw. voluminös und somit schwer transportabel sind. Weiters hat sich die Herstellung der bekannten Abschirmungen, deren Transport und die anschließende Aufstellung als teuer erwiesen.

Es kann erwähnt werden, dass dem Fachmann weiters Abschirmmatten (Absorbermatten) bekannt sind, die elektrisch leitfähige Teilchen (bspw. Grafit) in einem fasrigen Füllmaterial enthalten. Diese Abschirmmatten sind typischerweise 30 - 50 Zentimeter dick und werden je nach gewünschter Größe der Abschirmung aneinandergestellt. Bei diesen bekannten Abschirmungen aus Abschirmmatten hat sich als Nachteil erwiesen, dass der Transport der sehr voluminösen Abschirmmatten teuer ist und diese, beispielweise im Kassenbereich, relativ viel Platz wegnehmen. Das Dokument US 2008/0174407 A1 ist noch ein Beispiel des Stands der Technik. Der Erfindung liegt die Aufgabe zugrunde, eine Abschirmung für ein RFID-System bereitzustellen, die kostengünstig hergestellt, einfach und kostengünstig zum Aufstellungsort transportiert und dort aufgestellt werden kann. Diese Aufgabe wird durch Ansprüche 1,7 und 8 gelöst. Der flexible Hohlkörper, der beispielsweise ähnlich einer Luftmatratze ausgebildet sein kann, enthält somit beim Transport zum Aufstellungsort nur geringe Mengen von Füllmaterial. Als Füllmaterial kann besonders vorteilhaft Superabsorber verwendet werden, der in einem gänzlich anderen Fachgebiet mit gänzlich anderer Aufgabenstellung als Füllmaterial von Babywindeln allgemein bekannt ist. Am Aufstellort kann der Hohlkörper mittels einem Formelement oder einem Abschirmungshalter in die endgültige Form gebracht werden. Anschließend wird er am Aufstellungsort über einen Einfüllstutzen mit Flüssigkeit, insbesondere mit Wasser, befüllt. Der Superabsorber saugt das Wasser auf und füllt den gesamten Hohlraum des Hohlkörpers auf, wodurch der Hohlkörper eine stabile Form annimmt. Da Flüssigkeit zum Abschirmen von elektromagnetischen Feldern besonders gut geeignet ist, weist die mit Flüssigkeit befüllte Abschirmung einen sehr guten Abschirmungswert auf.

Weitere vorteilhafte Ausgestaltungen des erfindungsgemäßen RFID-Systems werden im Folgenden anhand der Figuren näher erläutert.
Figur 1 zeigt einen Hohlkörper, in dem Superabsorber enthalten ist.
Figur 2 zeigt den Hohlkörper gemäß Figur 1, in dem Wasser eingefüllt wird, das vom Superabsorber aufgesogen wird.
Figur 3 zeigt drei Tore eines Warenlagers, an denen je ein Lesegerät mit zwei Antennen vorgesehen ist, wobei die Erfassungsbereiche der Lesegeräte überlappen.
Figur 4 zeigt zwei Tore des Warenlagers, an denen je ein Lesegerät mit zwei Antennen vorgesehen ist, wobei zwischen den Toren ein Rahmen als Abschirmungshalter vorgesehen ist.
Figur 5 zeigt das RFID-System gemäß Figur 4, wobei in dem Abschirmungshalter ein Hohlkörper mit Superabsorber befestigt ist.
Figur 6 zeigt das RFID-System gemäß Figur 4, wobei in den Hohlkörper Wasser eingefüllt wird.
Figur 7 zeigt die drei Tore des Warenlagers gemäß Figur 3, wobei die Erfassungsbereiche der Lesegeräte durch Abschirmungen begrenzt sind.
Figur 8 zeigt eine Förderbandanlage mit einer Abschirmung, um die Erfassungsbereiche der Lesegeräte auf die auf den jeweiligen Förderbändern transportierten Transponder zu begrenzen.

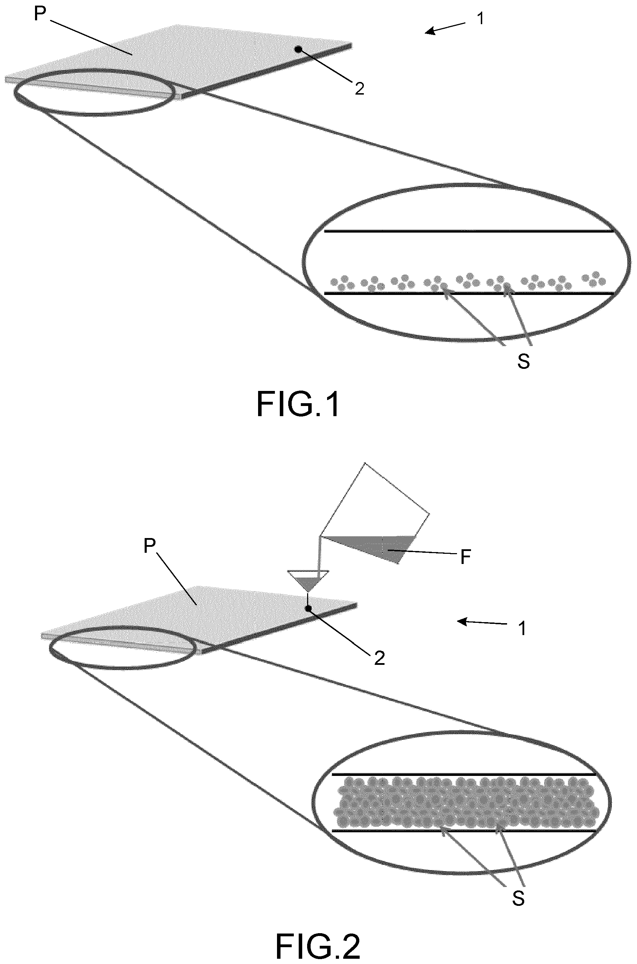

Figur 1 zeigt einen Hohlkörper 1, der ähnlich einer Luftmatratze durch zwei rechteckige Planen P gebildet ist, die an ihren Rändern flüssigkeitsdicht verbunden sind. Ein Einfüllstutzen 2 ist derart dimensioniert, dass Flüssigkeit in den Hohlkörper 1 eingefüllt werden kann. In dem Hohlkörper 1 sind Partikel aus Superabsorber S enthalten. Als Superabsorber (Superabsorbent Polymers, SAP) werden Kunststoffe bezeichnet, die in der Lage sind ein Vielfaches ihres Eigengewichts - bis zum 1000-fachen - an Flüssigkeit aufzusaugen. Partikel aus Superabsorber weisen eine Partikelgröße von 0,1 - 1,0 Millimeter auf, wobei es sich chemisch um ein Copolymer aus Acrylsäure und Natriumacrylat handelt. Erfindungsgemäß können aber auch andere Füllmaterialien zum Einsatz kommen, die ähnliche Eigenschaften aufweisen.

In Figur 2 ist der Vorgang dargestellt, wie in den Hohlkörper 1 Flüssigkeit F eingefüllt wird. Als Flüssigkeit bietet sich Wasser an, da es am Aufstellort des RFID-Systems zumeist unmittelbar vorhanden ist und nicht gesondert antransportiert werden muss. Da sich im mit Wasser vollgesogenem Superabsorber Keime bilden können, die Geruch entwickeln, ist es ratsam, entsprechende Vorkehrungen zu treffen. Einerseits kann destilliertes Wasser verwendet werden, das gegebenenfalls auch mit entsprechenden keimtötenden Chemikalien versetzt sein kann. Als besonders vorteilhaft hat sich allerdings erwiesen, bereits in dem Hohlkörper 1 solche Chemikalien vorzusehen, da dann am Aufstellort des RFID-Systems Wasser aus der Wasserleitung eingefüllt werden kann, wodurch die Aufstellung besonders einfach möglich ist.

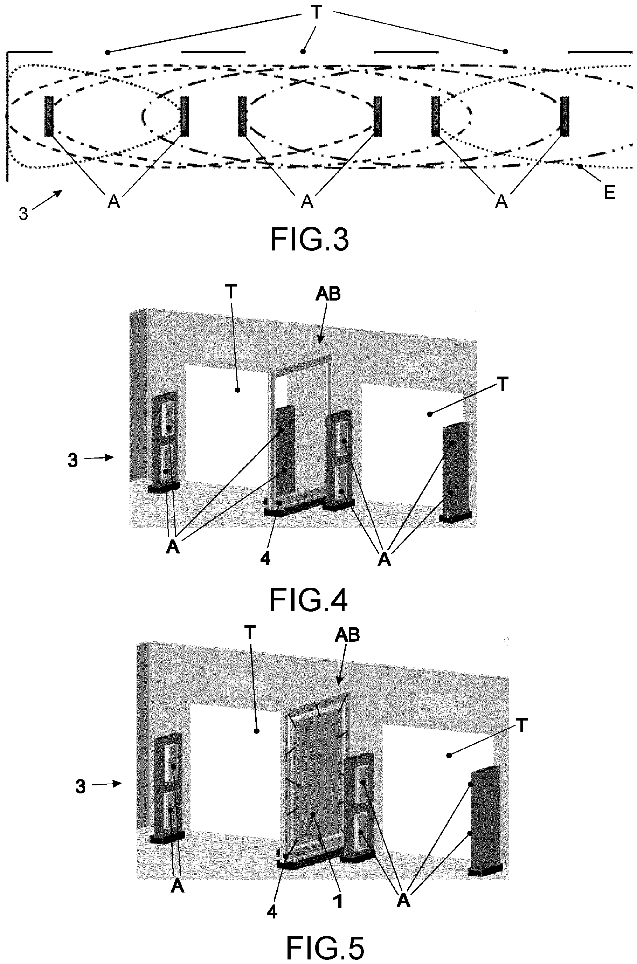

In Figur 3 sind drei Tore T eines Warenlagers symbolisch dargestellt, an die Lastkraftwagen mit ihrer Ladefläche zum Be- und Entladen von Ware heranfahren können. Das Warenlager weist ein RFID-System 3 auf, mit dem die an jeder Verpackungseinheit der Waren angebrachten Transponder ausgelesen werden können. Das RFID-System 3 weist je Tor T ein Lesegerät auf, an dem zwei Antennen A links und rechts vom Tor T angebracht sind. Von jeder Antenne A wird ein elektromagnetisches Feld UHF im Ultrahochfrequenzbereich von beispielsweise 868 MHz abgegeben, mit dem die passiven Transponder mit Energie versorgt werden. Um sicherzustellen, dass alle Transponder der durch das jeweilige Tor transportierten Waren zuverlässig ausgelesen werden, muss das Feld UHF mit ausreichender Feldstärke von den Antennen A abgegeben werden. Hierdurch können Transponder in Erfassungsbereichen E der Antennen A ausgelesen werden, die in Figur 3 als einander überlappende strichlierte und strichpunktierte Keulen dargestellt sind. Um zu verhindern, dass das Lesegerät eines Tors T die durch ein anderes Tor T transportierten Transponder ausliest, müssen Abschirmungen zwischen den Toren T vorgesehen sein, die den Erfassungsbereich E auf das jeweilige Tor T begrenzen.

In Figur 4 sind zwei der drei Tore T samt dem RFID-System 3 in einer Schrägansicht dargestellt. Zum Aufstellen einer Abschirmung AB zwischen den Antennen A der Lesegeräte der beiden Tore T wird vorerst ein Rahmen 4 im Boden befestigt, wobei der Rahmen 4 einen Abschirmungshalter bildet. Der Rahmen 4 kann beispielsweise aus einem Hohlprofil aus Aluminium gefertigt sein. Der Rahmen 4 dient dazu, den noch nicht mit Flüssigkeit F befüllten Hohlkörper 1 in seine für die Abschirmung AB gewünschte Form und Ausdehnung zu formen.

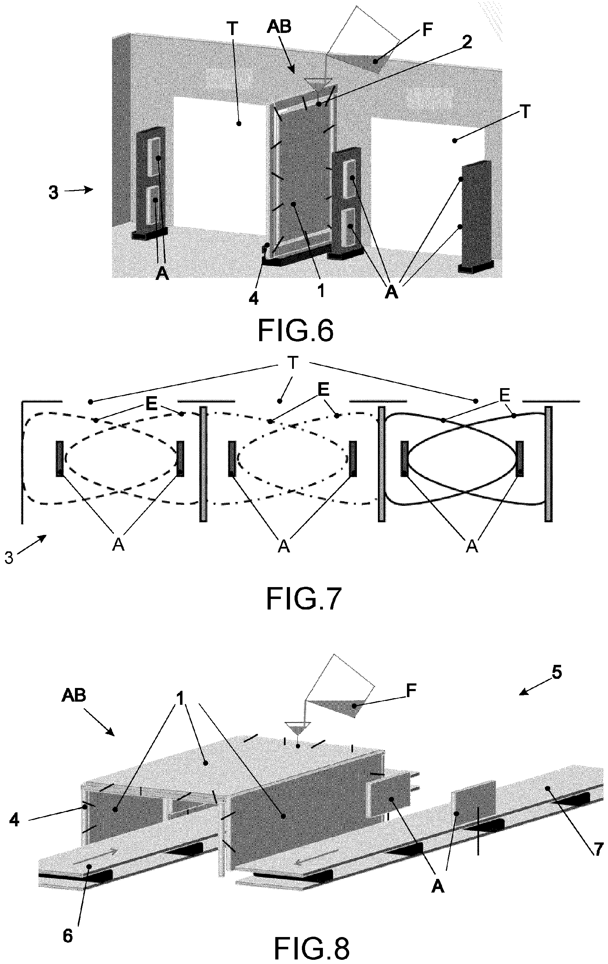

In Figur 5 ist das RFID-System 3 gemäß Figur 4 dargestellt, bei dem der noch nicht mit Flüssigkeit F befüllte Hohlkörper 1 in dem Rahmen 4 befestigt dargestellt ist. In Figur 6 ist der Vorgang des Befüllens des Hohlkörpers 1 mit Flüssigkeit F dargestellt. Beim Befüllen saugen die Superabsorber S die Flüssigkeit F auf und dehnen den Hohlkörper 1 auf die volle Größe und Form des Hohlkörpers 1 aus. Hierdurch wird der Hohlkörper 1 formstabil, weshalb für manche Anwendungsbeispiele der Abschirmungshalter nach dem Befüllen des Hohlkörpers 1 mit Flüssigkeit F nicht mehr benötigt wird. Besonders vorteilhaft ist allerdings, dass durch den Superabsorber die Flüssigkeit gleichmäßig in dem Hohlkörper 1 gebunden wird. Da Flüssigkeit F durch ihre physikalischen Eigenschaften besonders gut zum Dämpfen eines elektromagnetischen Feldes geeignet ist, weist die Abschirmung AB einen sehr guten Abschirmungswert auf.

Wie in Figur 7 dargestellt, werden die Erfassungsbereiche E der Antennen A der Lesegeräte derart begrenzt, dass von jedem Lesegerät tatsächlich nur die Transponder gelesen werden, die an Waren befestigt sind, die durch das jeweilige Tor T Be- oder Entladen werden. Der Einsatz von mit Superabsorber S gefüllten Hohlkörpern 1 als Abschirmungen AB hat den Vorteil, dass die noch nicht mit Flüssigkeit F befüllten Hohlkörper 1 leicht zum Aufstellungsort transportiert werden können. Weiters ist die Herstellung von luftmatratzenartigen Hohlkörpern kostengünstig möglich, Auch der bei Babywindeln bereits im industriellen Großeinsatz verwendete Superabsorber ist kostengünstig erhältlich. Weiters ist die Aufstellung der Abschirmungen AB auch von Hilfskräften ohne besondere technische Einschulung, und somit ebenfalls kostengünstig, durchführbar.

Als besonders vorteilhaft hat sich weiters erwiesen, im Inneren des Hohlkörpers Unterteilungen vorzusehen, um die Partikel der Superabsorber S während dem Befüllen mit Flüssigkeit möglichst gleichmäßig verteilt im Hohlkörper vorzusehen. Hierdurch wird vermieden, dass sich Beulen an bestimmten Stellen bilden, wodurch keine gleichmäßige Abschirmung mehr gegeben wäre.

Weiters hat es sich als vorteilhaft erwiesen, in dem Hohlkörper oder an der Hülle des Hohlkörpers ein biegsames Material - z.B. ein Metallgitter - vorzusehen, das dem noch nicht mit Flüssigkeit befüllten Hohlkörper seine vom Aufsteller gewünschte Form gibt. Besonders vorteilhaft ist es, wenn das Material mit der Hand verbiegbar ist, da hierdurch auf Spezialwerkzeug beim Aufstellen der Abschirmungen verzichtet werden kann. Durch das Metallgitter kann die Abschirmung praktisch beliebig geformt werden, um den Erfassungsbereich des Lesegeräts entsprechend der jeweiligen Applikation zu beschränken. Das Metallgitter hat auch noch einen zusätzlich abschirmenden Effekt.

Figur 8 zeigt eine Förderbandanlage 5 mit zwei Förderbändern 6 und 7, wobei über dem Förderband 6 bereits eine Abschirmung AB aufgestellt wurde, um den Erfassungsbereich der Lesegeräte auf die auf dem Förderband 6 transportierten Transponder zu begrenzen. Auch bei diesem Ausführungsbeispiel werden die vorstehend angeführten Vorteile durch die erfindungsgemäße Abschirmung AB erhalten.

Es kann erwähnt werden, dass erfindungsgemäße Abschirmungen in praktisch beliebigen Formen hergestellt werden können. Auch unterschiedlichste Materialien können bei der Herstellung der Hohlkörper zum Einsatz kommen.

Es kann erwähnt werden, dass erfindungsgemäße Abschirmungen auch zum Abschirmen von elektromagnetischen Feldern im Hochfrequenzbereich von beispielsweise 100 MHz bis zu 3 GHz ebenso gut einsetzbar sind.

Es kann erwähnt werden, dass an ein Lesegerät auch mehr als nur zwei Antennen angeschlossen werden können. Hierdurch könnte bei dem vorstehenden Ausführungsbeispiel mit dem Warenlager bei dem RFID-System 3 nur ein Lesegerät an die sechs Antennen angeschlossen sein.

## Patentansprüche

1. RFID-System (3) mit zumindest einem Lesegerät zum Identifizieren von Transpondern, die sich in einem räumlichen Erfassungsbereich (E) des Lesegeräts befinden, wobei eine Abschirmung (AB) zum Begrenzen des Erfassungsbereichs (E) vorgesehen ist, **dadurch gekennzeichnet, dass**
die Abschirmung (AB) durch einen flexiblen Hohlkörper (1) mit Einfüllöffnung (2) gebildet ist, wobei den Hohlkörper (1) nur teilweise ausfüllend ein Füllmaterial (S) vorgesehen ist, das unter Zufuhr von Flüssigkeit (F) durch die Einfüllöffnung (2) zum Aufsaugen eines Vielfachen seines Eigengewichts ausgebildet ist.

2. RFID-System (3) gemäß Anspruch 1, **dadurch gekennzeichnet, dass** das Füllmaterial durch einen Superabsorber (S) gebildet ist, wobei insbesondere in dem Hohlkörper (1) zusätzlich Chemikalien enthalten sind, die den mit Flüssigkeit (F) angesogenen Superabsorber (S) keim- und geruchsfrei halten.

3. RFID-System (3) gemäß einem der vorherigen Ansprüche, **dadurch gekennzeichnet, dass** der Hohlkörper (1) durch zumindest zwei an ihren Rändern flüssigdicht verbundene Planen (P) gebildet ist, die insbesondere mehrere Kammern zum Unterteilen des Hohlraumes des Hohlkörpers (1) aufweisen.

4. RFID-System (3) gemäß einem der vorherigen Ansprüche, **dadurch gekennzeichnet, dass** in dem Hohlkörper (1) und/oder an der Hülle des Hohlkörpers (1) ein Formelement vorgesehen ist, das dem Hohlkörper (1) bereits vor dem Einfüllen der Flüssigkeit (F) Formstabilität verleiht.

5. RFID-System (3) gemäß Anspruch 4, **dadurch gekennzeichnet, dass** das Formelement durch ein Metallgitter gebildet ist, das insbesondere mit der Hand verbiegbar ausgebildet ist.

6. RFID-System (3) gemäß einem der vorherigen Ansprüche, **dadurch gekennzeichnet, dass** ein Abschirmungshalter (4) vorgesehen ist, an dem der Hohlkörper (1) zum Befüllen mit Flüssigkeit (F) und insbesondere auch während dem Betrieb des RFID-Systems (3) befestigbar ist.

7. Abschirmung (AB) für ein RFID-System (3) mit wenigstens einem Lesegerät zum Identifizieren von Transpondern, die sich in einem räumlichen Erfassungsbereich (E) des Lesegeräts befinden, wobei die Abschirmung (AB) zum Begrenzen des Erfassungsbereichs (E) ausgebildet ist, **dadurch gekennzeichnet, dass** die Abschirmung (AB) die Merkmale der Abschirmung (AB) des RFID-Systems (3) gemäß einem der Ansprüche 1 bis 6 aufweist.

8. Verwendung eines Superabsorbers (S) als Füllmaterial eines Hohlkörpers (1) einer Abschirmung (AB) zur Begrenzung des räumlichen Erfassungsbereichs (E) eines Lesegeräts zum Auslesen von Transpondern.

## Claims

1. RFID System (3) with at least one reader for identifying transponders, which are located in a spatial coverage area (E) of the reader, wherein a shielding (AB) for limiting the coverage area (E) is provided, **characterized in that**
the shielding (AB) is made out of a flexible hollow body (1) with a feed opening (2), wherein a fill material (S) is provided, which fills the hollow body (1) only partially, which fill material (S) is configured to absorb a multiple of its own weight when provided with fluid (F) through the feed opening (2).

2. RFID System (3) according to claim 1, **characterized in that** the fill material is formed by a super absorber (S), wherein preferably in the hollow body (1) additionally chemicals are contained, which keep the super absorber (S) sterile and odourless when soaked with the fluid (F).

3. RFID System (3) according to any of the preceding claims, **characterized in that** the hollow body (1) is formed by at least two sheets (P) that are connected at least at their edges in a fluid tight manner, which sheets (P) preferably have multiple chambers for dividing the hollow chamber of the hollow body (1).

4. RFID System (3) according to any of the preceding claims, **characterized in that** in the hollow body (1) and/or on the wall of the hollow body (1) a shape element is provided, which gives the hollow body (1) form stability even before filling it with fluid (F).

5. RFID System (3) according to claim 4, **characterized in that** the shape element if made out of a metal grid, which is preferably configured so that it can be deformed by hand.

6. RFID System (3) according to any of the preceding claims, **characterized in that** a shielding mount (4) is provided, at which the hollow body (1) can be mounted for filling with fluid (F) and preferably also during operation of the RFID system (3).

7. Shielding (AB) for an RFID system (3) with at least a reader for identifying transponders, which are located in a spatial coverage area (E) of the reader, wherein the shielding (AB) is configured for limiting the coverage area (E), **characterized in that** the shielding (AB) has the features of the shielding (AB) of the RFID system (3) according to any one of the claims 1 to 6.

8. Use of a super absorber (S) as a fill material of a hollow body (a) of a shielding (AB) for limiting the spatial coverage area (E) of a reader for reading transponders.

## Revendications

1. Système RFID (3) avec au moins un lecteur pour l'identification de transpondeurs qui se situent dans une région de détection (E) spatiale du lecteur, où un blindage (AB) est prévu pour la délimitation de la région de détection (E), **caractérisé en ce que**
le blindage (AB) est formé par un corps creux (1) souple avec un orifice de remplissage (2), où le corps creux (1) est prévu pour n'être rempli que partiellement d'un matériau de remplissage (S), qui est conçu pour l'absorption de plusieurs fois son propre poids moyennant l'alimentation d'un liquide (F) par l'orifice de remplissage (2).

2. Système RFID (3) selon la revendication 1, **caractérisé en ce que** le matériau de remplissage est formé par un super absorbant (S), où, en particulier, des produits chimiques sont contenus de manière complémentaire dans le corps creux (1), qui maintiennent le super absorbant (S) saturé avec le liquide (F) exempt de germes et d'odeur.

3. Système RFID (3) selon l'une des revendications précédentes, **caractérisé en ce que** le corps creux (1) est formé par au moins deux bâches (P), reliées sur leurs bords, étanches aux liquides, qui présentent en particulier plusieurs chambres pour la subdivision de l'espace creux du corps creux (1).

4. Système RFID (3) selon l'une des revendications précédentes, **caractérisé en ce que**, dans le corps creux (1) et/ou sur l'enveloppe du corps creux (1), un élément de forme est prévu qui confère au corps creux (1) une stabilité de forme déjà avant le remplissage du liquide (F).

5. Système RFID (3) selon la revendication 4, **caractérisé en ce que** l'élément de forme est formé par une grille métallique qui est conçue en particulier pliable avec la main.

6. Système RFID (3) selon l'une des revendications précédentes, **caractérisé en ce qu'**un support de blindage (4) est prévu, sur lequel le corps creux (1) peut être fixé pour le remplissage avec du liquide (F) et en particulier également pendant le fonctionnement du système RFID (3).

7. Blindage (AB) pour un système RFID (3) avec au moins un lecteur pour l'identification de transpondeurs qui se situent dans une région de détection (E) spatiale du lecteur, où le blindage (AB) est conçu pour la délimitation de la région de détection (E), **caractérisé en ce que** le blindage (AB) présente les caractéristiques du blindage (AB) du système RFID (3) selon l'une des revendications 1 à 6.

8. Utilisation d'un super absorbant (S) en tant que matériau de remplissage d'un corps creux (1) d'un blindage (AB) pour la délimitation de la région de détection (E) spatiale d'un lecteur pour la lecture de transpondeurs.
